# EUROPEAN PATENT APPLICATION

(11) **EP 1 160 651 A1**
(43) Date of publication of application: **05.12.2001**
(21) Application number: 01610055.4
(22) Date of filing: 28.05.2001
(51) Int. Cl.: G06F 3/00

(54) **Wireless cursor control**

(30) Priority: 29.05.2000 IL 13643400
(71) Applicant: Moshe, Ein-Gal, 47203 Ramat Hasharon (IL)
(72) Inventor: Moshe, Ein-Gal, 47203 Ramat Hasharon (IL)
(74) Representative: Sigh, Erik

(57) **Abstract**

A wireless cursor control system including an optical sensor operative to sense spatial movement of fingers of a hand of a user, and to generate signals in response to the movement and a processor in communication with the optical sensor operative to process the signals for performing operations on a computer screen.

A method for forming text on a computer screen is also disclosed.

## Description

### BACKGROUND OF THE INVENTION

Wireless cursor control systems have been proposed to replace joysticks, mouses, trackballs and the like, for performing operations on a computer screen, such as controlling movement of a cursor.

One example of a wireless cursor control system is described in German Patent Document DE 29822503. The system includes a first, horizontal bearing plate and a stationary, but freely rotating, ball that can be rolled on a surface of a second, vertical, bearing plate. A partially spherical or ellipsoid appliance is provided that can be held with all fingers by a human hand. The appliance includes an outside contour in an area not held by the human hand, within which the ball is arranged. The outside contour is adjusted to fit the surface contour of the roll surface of the second bearing plate. A controller converts the rotation of the ball into signals that determine the position of the cursor on a computer screen.

German Patent Document DE 29809762 describes a system in which a screen of a computer monitor has a surface detector screen overlay that detects incoming signals from a remote hand held computer input unit. The screen and input unit provide position control of a screen cursor. The position signal transmission is in the form of a laser beam or an infra red emission. The detector layer is in the form of material that responds to ultrasonic waves produced by the laser pulse action.

US Patent 5,181,181 describes a three-dimensional computer apparatus input device that uses three sets of accelerometers and angular rate sensors to determine acceleration, velocity, relative position and attitude of the device.

### SUMMARY OF THE INVENTION

The present invention seeks to provide an improved wireless cursor control system.

There is thus provided in accordance with a preferred embodiment of the present invention a wireless cursor control system including an optical sensor operative to sense spatial movement of fingers of a hand of a user, and to generate signals in response to the movement, and a processor in communication with the optical sensor operative to process the signals for performing operations on a computer screen.

In accordance with a preferred embodiment of the present invention hand-worn apparatus is provided which is adapted to fit on fingers of a hand of a user, wherein the optical sensor is operative to sense spatial movement of the hand-worn apparatus.

Further in accordance with a preferred embodiment of the present invention the hand-worn apparatus includes datum marks sensible by the optical sensor, the optical sensor generating signals in response to spatial movement of the datum marks.

Still further in accordance with a preferred embodiment of the present invention the hand-worn apparatus includes thimbles that fit on fingers of a hand of a user.

Additionally in accordance with a preferred embodiment of the present invention the optical sensor includes at least one television camera. Preferably the processor processes the signals to determine a position of a cursor on a computer screen. Alternatively, the processor processes the signals to form text corresponding to the movement of the fingers of a hand of a user.

In accordance with a preferred embodiment of the present invention the hand-worn apparatus is moved to simulate playing a musical instrument and the processor processes the signals to create music corresponding to the movement of the fingers of a hand of a user.

Further in accordance with a preferred embodiment of the present invention a replica keyboard is provided for guiding a user in movement of the fingers of a hand of a user.

### BRIEF DESCRIPTION OF THE DRAWING

The present invention will be understood and appreciated more fully from the following detailed description, taken in conjunction with the drawing in which:

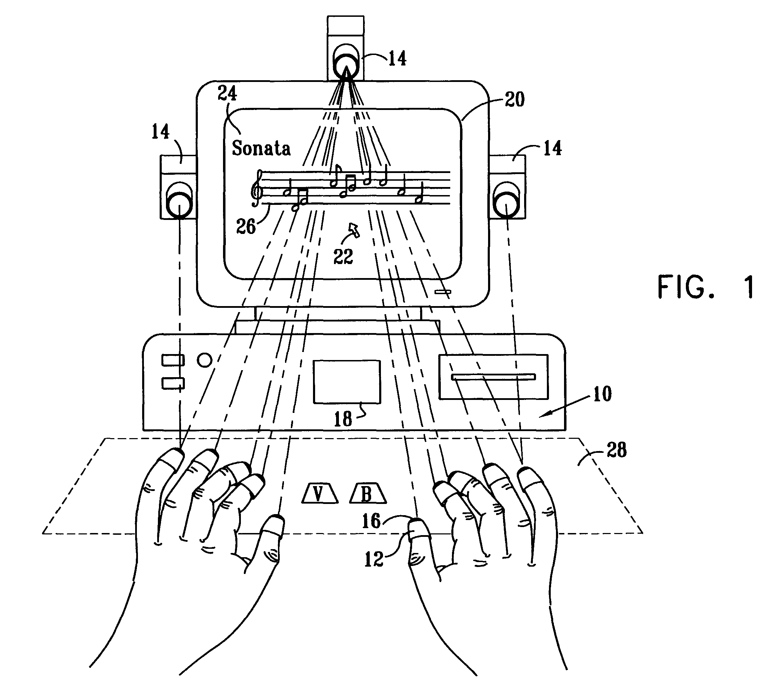

Fig. 1 is a simplified pictorial illustration of a wireless cursor control system constructed and operative in accordance with a preferred embodiment of the present invention.

### DETAILED DESCRIPTION OF A PREFERRED EMBODIMENT

Reference is now made to Fig. 1, which illustrates a wireless cursor control system 10 constructed and operative in accordance with a preferred embodiment of the present invention.

System 10 preferably includes hand-worn apparatus 12 adapted to fit on fingers of a hand of a user. Hand-worn apparatus 12 may include gloves, mittens, mitts, thimbles (the embodiment illustrated in Fig. 1) and the like.

An optical sensor 14 is provided for sensing spatial movement of hand-worn apparatus 12. Preferably hand-worn apparatus 12 includes datum marks 16, such as darkened spots on the tips of the thimbles, that can be easily sensed by optical sensor 14. Optical sensor 14 may include one or more television cameras placed a sufficient distance from the user for viewing hand-worn apparatus 12, and particularly datum marks 16. Optical sensor 14 can generate signals in response to the movement of hand-worn apparatus 12.

In accordance with an alternatively preferred embodiment of the present invention, hand-worn apparatus 12 is omitted, and optical sensor 14 senses spatial movement of the fingers themselves of the user. In such an embodiment, optical sensor 14 may monitor movement of the fingertips, fingernails, knuckles, etc.

A processor 18 is in wired or wireless communication with optical sensor 14, and can process the signals from optical sensor 14 for performing operations on a computer screen 20. For example, processor 18 can processes the signals to determine a position of a cursor 22 on screen 20. In another example, hand-worn apparatus 12 or the user's fingers can be moved to simulate typing on a keyboard and processor 18 processes the signals from optical sensor 14 to form text 24 corresponding to the movement of hand-worn apparatus 12 or the user's fingers. In yet another example, hand-worn apparatus 12 can be moved to simulate playing a musical instrument, such as a piano, and processor 18 processes the signals from optical sensor 14 to create music 26 corresponding to the movement of hand-worn apparatus 12 or the user's fingers.

The invention preferably provides audible or visual feedback to verify that the user has "pressed" the correct key. As a simple example, if the user desires to "strike" the key "q", then verification of the correct key-stroke will be provided simply by the appearance of the letter q on computer screen 20.

In addition to key-strokes, the user can move his/her fingers to signal other functions. For example, the user can lift his/her index finger to indicate to processor 18 the same type of information that a mouse click would indicate. As another example, left-right movement of one of the fingers can be used to activate and operate a robot. It is noted that up and down movement of the fingers can perhaps be better sensed by optical sensor 14 by resting the fingers on a reference surface (such as replica keyboard 28), which acts as a datum plane from which processor 18 measures the up and down movement.

System 10 can thus be used as a "virtual" playing instrument or a "virtual" keyboard. In order to assist a non-professional user who is not intimately familiar with an alphanumeric keyboard or a musical keyboard, the replica keyboard 28, such as a printed copy of the keys of a keyboard, may be provided for guiding the user in his/her "virtual" typing or playing. In addition, the invention can be used with any kind of hand communication, such as sign language.

It will be appreciated by persons skilled in the art that the present invention is not limited by what has been particularly shown and described hereinabove. Rather the scope of the present invention includes both combinations and subcombinations of the features described hereinabove as well as modifications and variations thereof which would occur to a person of skill in the art upon reading the foregoing description and which are not in the prior art.

## Claims

1. A wireless cursor control system comprising:
an optical sensor operative to sense spatial movement of fingers of a hand of a user, and to generate signals in response to said movement; and
a processor in communication with said optical sensor operative to process said signals for performing operations on a computer screen .

2. The system according to claim 1 and further comprising hand-worn apparatus adapted to fit on fingers of a hand of a user, wherein said optical sensor is operative to sense spatial movement of said hand-worn apparatus.

3. The system according to claim 2 wherein said hand-worn apparatus comprises datum marks sensible by said optical sensor, said optical sensor generating signals in response to spatial movement of said datum marks.

4. The system according to claim 2 or claim 3 wherein said hand-worn apparatus comprises thimbles that fit on fingers of a hand of a user.

5. The system according to any of the preceding claims wherein said optical sensor comprises at least one television camera.

6. The system according to any of the preceding claims wherein said processor processes said signals to determine a position of a cursor on a computer screen.

7. The system according to any of the preceding claims wherein said processor processes said signals to form text corresponding to the movement of the fingers of a hand of a user.

8. The system according to any of claims 1-6 wherein said hand-worn apparatus is moved to simulate playing a musical instrument and said processor processes said signals to create music corresponding to the movement of the fingers of a hand of a user.

9. The system according to any of the preceding claims and further comprising a replica keyboard for guiding a user in movement of the fingers of a hand of a user.

10. A method for forming text on a computer screen, comprising:
providing an optical sensor for sensing spatial movement of fingers of a hand of a user, operative to generate signals in response to said movement;
providing a processor in communication with said optical sensor operative to process said signals for performing operations on a computer screen; and
moving the fingers of the hand of the user to simulate typing on a keyboard, said processor processing said signals to form text corresponding to the movement of said fingers.

11. A method for creating music, comprising:
providing an optical sensor for sensing spatial movement of fingers of a hand of a user, operative to generate signals in response to said movement;
providing a processor in communication with said optical sensor operative to process said signals for performing operations on a computer screen; and
moving the fingers of the hand of the user to simulate playing a musical instrument, said processor processing said signals to create music corresponding to the movement of said fingers.
